# EUROPEAN PATENT APPLICATION

(11) **EP 0 914 987 A2**
(43) Date of publication of application: **12.05.1999**
(21) Application number: 98308970.7
(22) Date of filing: 03.11.1998
(51) Int. Cl.: B60Q 1/04, B60Q 1/068

(54) **Lamp mounting and adjustment assembly for an automotive vehicle**

(30) Priority: 05.11.1997 US 964795
(71) Applicant: Ford Global Technologies, Inc., Dearborn, Michigan 48126 (US)
(72) Inventor: van Oel, Robert W., Saline, Michigan 48176 (US)
(74) Representative: Messulam, Alec Moses

(57) **Abstract**

A lamp mounting and adjustment assembly for an automotive vehicle includes a plurality of fasteners (20) fixedly mounted at one end to the vehicle body, each fastener (20) having a mounting surface (28) formed interiorly of the vehicle body, a lamp housing (14,16) having a horizontal plane, and a carrier bracket (22) extending generally parallel to the horizontal plane having an operating surface (40) projecting therefrom and received by a vertical adjustment mechanism (48), a plurality of mounting mechanisms (44,46) laterally spaced along the bracket and fixedly secured to the lamp housing, and a plurality of mounting bosses (38) received on the mounting surfaces (28) in rotationally free mounting relationship about an axis generally parallel to the horizontal plane.

## Description

The present invention relates to automotive vehicle lamps, and more specifically, to mounting and adjustment assemblies for automotive headlamps.

Conventional mounting and adjustment assemblies for automotive headlamps include three mounts: one horizontal adjusting screw, one vertical adjusting screw, and one pivot. All three of the mounts are weight-bearing in that they bear the weight of the headlamp while supporting it within a support frame attached to the automotive vehicle. In addition to supporting the headlamp within the support frame, the horizontal and vertical adjusting screws also serve the function of providing a mechanism for adjusting the positioning of the headlamp in relation to the support frame. The adjusting screws function to rotate the headlamp about a vertical and horizontal axis of adjustment. In this manner, the direction of a light beam emanating from the headlamp can be adjusted in a horizontal plane and in a vertical plane to achieve a desired direction or aim.

Generally, the horizontal and vertical adjusting screws support the headlamp in a cantilever relationship where one end of the screw is attached to the support frame while the other end is attached to the headlamp. By axially rotating the screw, the point at which the screw is attached to the headlamp is either moved towards or away from the support frame, depending on the direction of rotation. When the horizontal adjusting screw is thus rotated, the lamp pivots about the vertical adjusting screw and the pivot. Together, the vertical adjusting screw and pivot define the vertical axis of adjustment. In a similar fashion, when the vertical adjusting screw is axially rotated, the headlamp pivots about its horizontal axis of adjustment, which is defined by the horizontal adjusting screw and the pivot.

The dual mounting and adjustment function via a threaded cantilever attachment of the headlamp with the vehicle is undesirable for a number of reasons. Although the adjusting screws generally provide an effective mechanism by which to adjust the aim of the headlamp, their dual role as a mounting mechanism is disadvantageous. The cantilevered adjusting screws provide a stiff support structure which tends to transmit, rather than dampen, concussions to the headlamp caused by vehicle vibrations during travel. Such concussions, over time, may result in the failure of the filament contained within the headlamp light bulb. Also inherent with conventional automotive headlamp adjust and support mechanisms is the stringency of the positional relationship in which the pivot, horizontal adjusting screw, and vertical adjusting screw must be placed. Specifically, the pivot, horizontal adjusting screw, and vertical adjusting screw must be: 1) placed in an orthogonal relationship with one another, and 2) attached to the headlamp in roughly the same vertical plane. These positional requirements are necessary in order to achieve proper horizontal and vertical adjustment of the aim of the headlamp. However, such constraints limit the flexibility with which the front or grill portion of vehicles can be designed. As is known, space under the hood of the vehicle in the vicinity of the headlamps is limited. In designing a vehicle, efforts are continuously made to maximise the use of such limited space, as well as to design an aesthetically appealing grill portion with excellent fit characteristics. The stringent positional relationship of the pivot, horizontal adjusting screw, and vertical adjusting screw dictated by conventional headlamp mounting and adjustment assemblies impede such efforts.

An example of a mounting and adjustment assembly for a headlamp which addresses the disadvantages associated with the conventional assemblies is disclosed in Van Oel et al., U.S. Patent No. 5,526,238, assigned to the assignee of the present invention. Therein, a headlamp is mounted within the body of a motor vehicle by a horizontal adjust and support mechanism in which the load bearing and adjusting functions are separated to provide a support structure which does not rely on a cantilever arrangement. A vertical adjustment mechanism is secured to the body of the motor vehicle and receives an operating pin, which projects from the back surface of the headlamp, so that vertical adjustment of the headlamp may be effected.

A disadvantage associated with such an apparatus is the reliance on an integrally moulded headlamp operating pin to effect vertical adjustment of the headlamp. The operating pin projects from the back surface of the headlamp and is received by the vertical adjustment mechanism. The reflective surface of the headlamp has highly sensitive design requirements. Injection moulding a pin directly behind the reflective surface can cause a sink mark on the reflective surface, a condition which is unacceptable. Also, due to the manufacturing limitations associated with plastic injection moulding, the pin must project perpendicularly from the back surface of the headlamp in order to be in die-draw. These constraints limit the flexibility with which the front portion of the vehicle is designed. In designing a vehicle, efforts are continuously made to maximise the use of the limited space in the vicinity of the headlamp, as well as to design an aesthetically appealing grill portion with excellent fit characteristics with respect to the adjacent body. The limited positional and axial orientation of an integrally moulded headlamp operating pin impedes such efforts.

Accordingly, it is seen that a need exists in the art for a mounting and adjustment assembly for a headlamp which allows greater flexibility in the positioning of the operating pin while providing improved non-cantilevered lamp support.

The present invention provides a lamp mounting and adjustment assembly for an automotive vehicle having a plurality of fasteners fixedly mounted at one end to the vehicle body, each fastener having a mounting surface formed interiorly of the vehicle body, a lamp housing having a horizontal plane, and a carrier bracket extending generally parallel to the horizontal plane having a plurality of mounting bosses received on the mounting surfaces in rotationally free mounting relationship about an axis generally parallel to the horizontal plane.

The carrier bracket has an operating surface projecting therefrom and the lamp mounting and adjustment assembly further includes a vertical adjustment mechanism having a vertically oriented slide housing attached to the vehicle body, a slide member disposed in vertically translatable fashion within the slide housing having a horizontally oriented slot disposed in vertically translatable fashion within the slide housing having a horizontally oriented slot disposed therein and the operating surface received therethrough, and a vertical translation mechanism for translating the slide member within the slide housing.

An advantage of the present invention is that the vertical adjustment operating surface may be placed at any location and at any axial attitude behind the headlamp thereby allowing for greater design freedom.

The invention will now be described, by way of example, with reference to the accompanying drawings, in which:
Figure 1 is a perspective view of an automotive vehicle front end;
Figure 2 is a top view of a single lamp mounting and adjustment assembly embodying the present invention;
Figure 3 is a top view of a dual lamp mounting and adjustment assembly according to the present invention;
Figure 4 is a perspective view of a fastener and carrier bracket mounting boss embodying the present invention;
Figure 5 is a side view of a fastener, mounted to a support frame, embodying the present invention;
Figure 6 is a side view of an adjustable fastener embodying the present invention; and
Figure 7 is a perspective view of a vertical adjustment mechanism embodying the present invention.

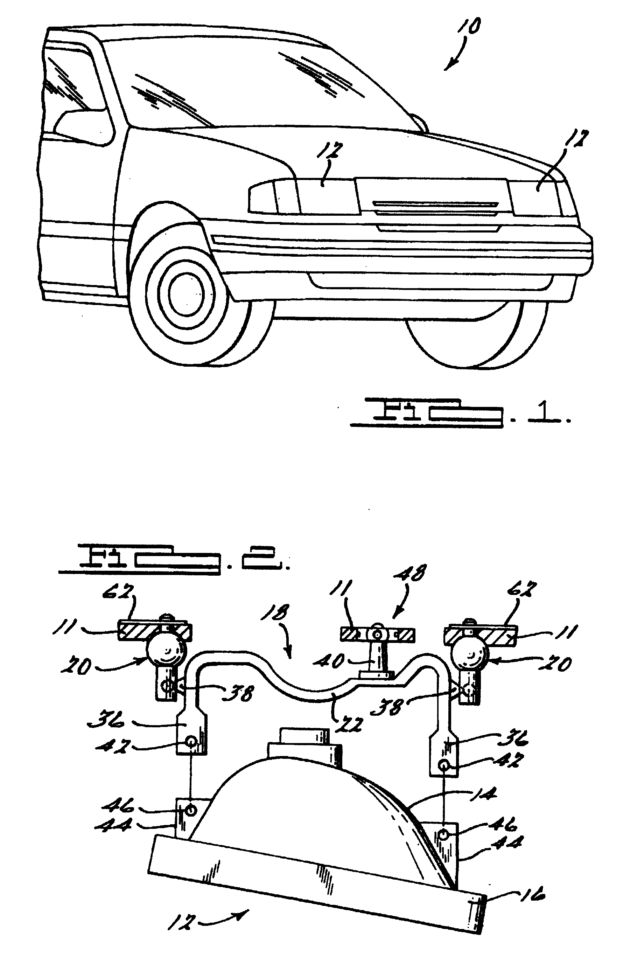

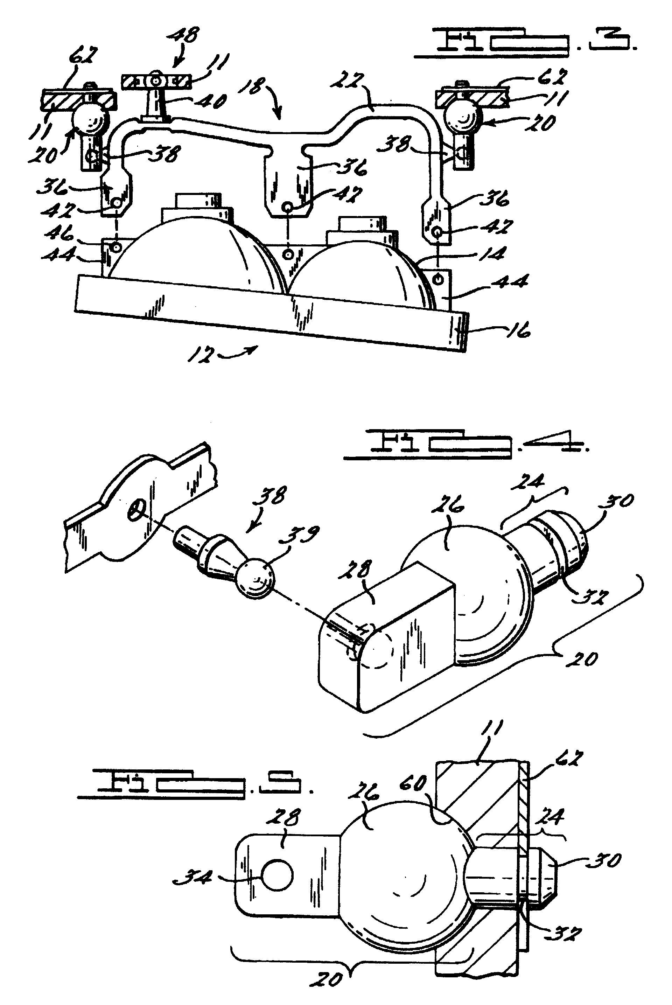

Turning now to the drawings, and in particular to Figures 1 and 2 thereof, of an automotive vehicle 10 is shown having a pair of headlamps 12. The headlamps 12 are supported by a lamp mounting and adjustment assembly 18 having fasteners 20, a carrier bracket 22, and a vertical adjustment portion 48. The assembly 18 is mounted to a support frame 11 which is attached to the front or grill portion of a vehicle 10.

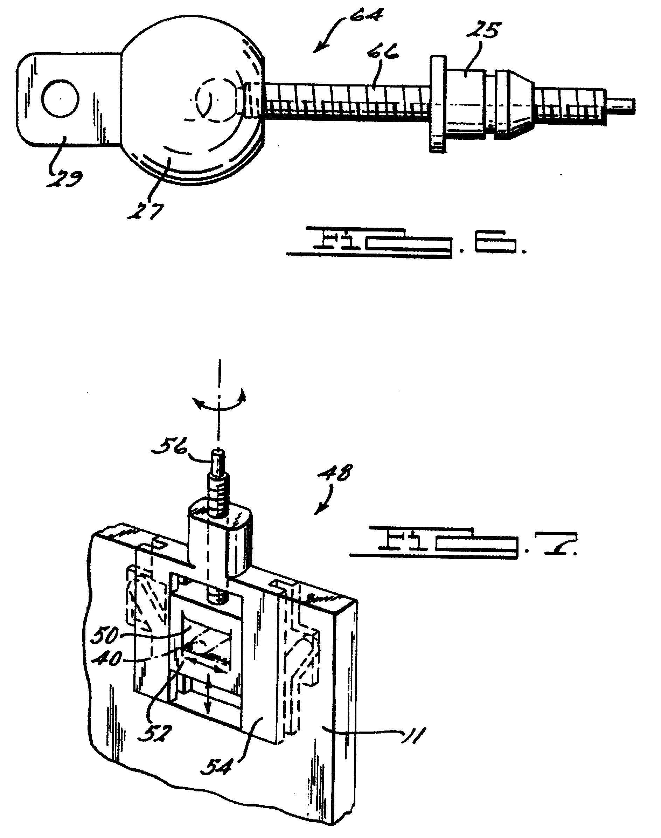

As shown in Figures 2 and 3, the headlamps 12 generally include a reflector portion 14, a lens portion 16, and have a horizontal plane. The headlamps 12 may have a single reflector or a dual reflector as shown in Figures 2 and 3 respectively. The headlamps 12 have bracket mount receiving portions 44 disposed at laterally inner and outer sides. The receiving portions 44 have lamp pin holes 46 therethroughout which are perpendicular to the horizontal plane.

The carrier bracket 22 is an elongate steel rod extending generally parallel to the horizontal plane and longitudinally behind the headlamps 12. The bracket 22 has a plurality of laterally spaced bracket mounting portions 36. A single reflector 14 headlamp 12 has a pair and a dual reflector headlamp has preferably three bracket mounting portions 36. In a preferred embodiment, the bracket mounting portions 36 are peened pads generally parallel to the horizontal plane with a pin hole 42 therethrough being axially perpendicular to the horizontal plane. The bracket 22 also has an operating surface 40 projecting generally perpendicular therefrom. Depending on design requirements, the operating surface 40 may axially vary from the perpendicular without departing from the scope of the present invention. Preferably the operating surface 40 is an operating pin. As shown most clearly in Figure 4, the bracket 22 also has a pair of mounting bosses 38. The mounting bosses 38 have a generally spherical head portion 39 and are positioned longitudinally intermediate the bracket mounting portions 36 and the operating surface 40.

As shown in Figures 4 and 5, the fasteners 20 each have a mounting portion 24, a load bearing portion 26, and a mounting surface portion 28. The mounting portion 24 is an elongate cylindrical structure having a generally uniform diameter, a tapered head 30, and a recessed annular neck 32. The load bearing portion 26, intermediate the mounting portion 24 and the mounting surface portion 28, is substantially spherical. The mounting surface portion 28 has a housing structure having a substantially spherical recess 34.

As shown in figures 2, 3 and 7, the vertical adjustment portion 48 has a slide housing 54 having a slide member 52 with a contracting portion 50. The contracting portion 50 is a horizontally oriented slot disposed within the slide member 52. The slide member 52 is connected by a vertical adjusting screw 56 to the slide housing 54 and is vertically translatable therein. The vertical adjusting screw 56 threadingly engages the slide housing 54 and rotatably engages the slide member 52.

As shown in Figure 5, during assembly, the tapered head 30 of the fastener 20 is received by a mating hole 58 in the support frame 11. The load bearing portion 26 of the fastener 20 seats against a mating spherical depression 60 in the support frame 11. When the load bearing portion 26 is seated flush against the spherical depression 60, the neck 32 of the mounting portion 24 is exposed beyond the support frame 11. A pin 62 is used to intersect the neck 32 and prevent the tapered head 30 from retracting back into the mating hole 58. As shown in Figure 4, the spherical head portion 39 of the mounting bosses 38 is received in the recess 34 of the mounting surface portion 28 in rotationally free engagement about an axis generally parallel to the horizontal plane. As shown in Figures 2 and 3, the pin holes 42 of the bracket mounting portions 36 are axially aligned with the lamp pin holes 46 and receive conventional fasteners (not shown) therethrough to rigidly mount the carrier bracket 22 to the headlamps 12. As shown in Figures 2 and 7, he slide housing 54 is attached to the support frame 11 and the operating surface 40 is received by the contacting portion 50 in an axially free contacting relationship.

In use, the headlamps 12 are vertically adjusted via the vertical adjustment portion 48. The vertical adjusting screw 56 is rotated to vertically translate the slide member 52 within the slide housing 54. The contacting portion 50 of the slide member 52 thereby effects the vertical displacement of the operating surface 40. Upon vertical displacement of the operating surface 40 the mounting bosses 38, in rotational contact with the recesses 34, allow the carrier bracket 22 and the headlamp 12 to rotate thereby effecting vertical adjustment of the headlamp 12.

The preferred embodiment is advantageous because the axial orientation of the operating surface 40 is no longer constrained to projecting perpendicularly from the headlamp 12 and may also be positioned at any location behind the reflector portion 14, thereby allowing greater design freedom.

Referring now to Figure 6, an alternative embodiment of a lamp mounting and adjustment assembly 18 has a horizontal adjustment fastener 64. The horizontal adjustment fastener 64 has a mounting portion 25, a load bearing portion 27, and a mounting surface portion 29. The load bearing portion 27 and the mounting portion 25 are connected by a horizontal adjusting screw 66. The horizontal adjusting screw 66 threadingly engages the mounting portion 25 and rotatably engages the load bearing portion 27. As is the case with fastener 20, the mounting portion 25 fixedly engages the support frame 11 and the mounting surface portion 29 rotatably receives the mounting boss 38. Upon rotation of the horizontal adjusting screw 66 the load bearing portion 27 is longitudinally translated causing the carrier bracket 22 and the headlamp 12 to rotate about an axis perpendicular to a horizontal plane, thereby effecting horizontal adjustment of the headlamp 12.

Only two embodiments of a lamp mounting and adjustment assembly 18 for an automotive vehicle 10 of the present invention have been described. Those skilled in the automotive mechanical arts will appreciate that others may be possible without departing from the scope of the following claims.

## Claims

1. A lamp mounting and adjustment assembly for an automotive vehicle, comprising:
a plurality of fasteners (20) fixedly mounted at one end to a vehicle body, each fastener having a mounting surface (28) formed thereon interiorly of the vehicle body;
a lamp housing (14,16) having a horizontal plane; and
a carrier bracket (22) extending generally parallel to the horizontal plane and having a plurality of mounting means (36,44) laterally spaced along the bracket and fixedly secured to the lamp housing and a plurality of mounting bosses (38) received on the mounting surfaces (28) in rotationally free mounting relationship about an axis generally parallel to the horizontal plane whereby vertical adjustment of the carrier bracket (22) and lamp housing (14,16) can be effected.

2. A lamp mounting and adjustment assembly according to claim 1, wherein the carrier bracket includes means defining an operating surface projecting therefrom for effecting the vertical adjustment.

3. A lamp mounting and adjustment assembly for an automotive vehicle, comprising:
a plurality of fasteners fixedly mounted at one end to the vehicle body, each fastener having a substantially spherical mounting surface formed thereon interiorly of the vehicle body;
a lamp housing having a horizontal plane; and
a carrier bracket extending generally parallel to the horizontal plane having a plurality of mounting means laterally spaced along the bracket and fixedly secured to the lamp housing, a plurality of substantially spherical mounting bosses received on the mounting surfaces in rotationally free mounting relationship about an axis generally parallel to the horizontal plane, and means defining an operating surface projecting therefrom whereby vertical adjustment of the carrier bracket and lamp housing may be effected.

4. A lamp mounting and adjustment assembly for an automotive vehicle, comprising:
a plurality of fasteners fixedly mounted at one end to the vehicle body, each fastener having a mounting surface formed thereon interiorly of the vehicle body;
a lamp housing having a horizontal plane;
a carrier bracket extending generally parallel to the horizontal plane having a plurality of mounting means laterally spaced along the bracket and fixedly secured to the lamp housing, a plurality of mounting bosses received on the mounting surfaces in rotationally free mounting relationship about an axis generally parallel to the horizontal plane and means defining an operating surface projecting therefrom; and
vertical adjustment means in contacting relationship with the means in contacting relationship with the means defining an operating surface whereby vertical adjustment of the carrier bracket and lamp housing may be effected.

5. A lamp mounting and adjustment assembly according to claim 4, wherein the vertical adjustment means, comprises:
a vertically oriented slide housing attached to the vehicle body;
a slide member disposed in vertically translatable fashion within the slide housing, having a horizontally oriented slot disposed therein and the means defining an operating surface received therethroughout; and
means for vertically translating the slide member within the slide housing whereby vertical adjustment of the carrier bracket and lamp housing may be effected.

6. A lamp mounting and adjustment assembly according to claim 2, 3 or 4, wherein the means defining an operating surface is an operating pin.

7. A lamp mounting and adjustment assembly according to claim 3, wherein the operating pin projects perpendicularly from the carrier bracket.

8. A lamp mounting and adjustment assembly according to claim 2, 3 or 4, wherein the plurality of mounting bosses are located longitudinally intermediate the means defining an operating surface and the lamp housing.

9. A lamp mounting and adjustment assembly according to any one of the preceding claims, wherein at least one of the plurality of fasteners has means for adjusting the fastener length to effect horizontal adjustment of the carrier bracket and lamp housing is effected.

10. A lamp mounting and adjustment assembly according to any one of the preceding claims, wherein the lamp housing has a radially inner reflective surface and the means defining an operating surface is located longitudinally behind the reflective surface.

11. A lamp mounting and adjustment assembly according to claim 1, wherein the lamp housing has laterally inner and outer sides and the plurality of mounting means are fixedly secured thereat so as to bridge the inner to the outer sides.
